# EUROPEAN PATENT APPLICATION

(11) **EP 1 710 905 A1**
(43) Date of publication of application: **11.10.2006**
(21) Application number: 06251833.7
(22) Date of filing: 31.03.2006
(51) Int. Cl.: H02P 7/29, H02P 6/18, D05B 69/12

(54) **Motor control circuit for sewing machine**

(30) Priority: 04.04.2005 JP 2005107099
(71) Applicant: AISIN SEIKI KABUSHIKI KAISHA, Kariya-shi, Aichi-ken 448-8650 (JP)
(72) Inventor: Teranishi, Shunichi, IP Dept., Aisin KK, Kariya-shi, Aichi-ken 448-8650 (JP); Ando, Takaki, Aisin Engineering Co., Ltd., Kariya, Aichi 448-8650 (JP)
(74) Representative: Marshall, John Grahame

(57) **Abstract**

A motor control circuit for a sewing machine including a speed command circuit (9) for instructing a target speed of a motor (3), a power supply circuit (1), a drive circuit (4), a counter electromotive force detection circuit (2) for detecting a counter electromotive voltage of the motor and calculating an actual speed of the motor, and a mechanical pulse generator (8) for detecting a rotation of a sewing needle characterized in that the motor control circuit further comprises a correction circuit (51) for calculating a speed correction value for the target speed on the basis of a comparison between the target speed and the sewing machine speed, and a comparison process circuit (52) for feed-backing a pulse width to the drive circuit, the pulse width being obtained by adding the speed correction value to a result of a subtraction of the actual speed from the target speed.

## Description

### FIELD OF THE INVENTION

This invention generally relates to a motor control circuit for a sewing machine. More particularly, this invention pertains to a motor control circuit for controlling a rotation speed of a motor of a sewing machine.

### BACKGROUND

A known motor control circuit for a sewing machine is disclosed in JP1996-150279A and JP2004-321771A. According to the motor control circuit for a sewing machine disclosed, a speed of a motor is detected by measuring a pulse width and the number of pulses using a photo interrupter and an encoder disc (100 pulses/rotation) assembled on the motor. In addition, a motor control circuit for a sewing machine disclosed in JP2000-354395A indicates a basic concept for obtaining a speed of a motor from a voltage value by a counter electromotive force of the motor. Further, JP1994-32742B2, JP1995-16553B3, and JP1995-16554B2 each includes a calculating means for calculating a pulley ratio of a sewing machine pulley and a motor pulley connected to each other by means of a belt based on a counting result of the calculating means. The pulley ratio calculated is set as a multiplier value in a multiplier that constitutes a correction means together with the calculating means. As a result, a speed of the sewing machine is instructed through a speed command signal so that the motor speed following the speed command signal can be obtained. The speed of the sewing machine is controlled at a predetermined level in response to the speed command signal with any pulley ratio.

However, according to the method of detecting the rotation speed by means of measurement of the pulse width and the number of pulses as shown in JP1996-150279A and JP2004-321771A, a pair of a photo interrupter and an encoder disc are required on both the sewing machine and the motor if the sewing machine and the motor are connected to each other by the belt. Thus, a cost increase is inevitable. In addition, a counter driven by a clock pulse with high accuracy for the purposes of measuring a pulse width is required. In order to detect a speed in a wide range from a low speed to a high speed, a large capacity is necessary for the counter and a memory, which requires a high-speed processing circuit and memory. Even if the counter with the high-speed processing feature and the high-speed processing circuit are equipped, an actual speed cannot be precisely measured unless a pulse shaped as an output of the photo interrupter appears.

According to the motor control circuit for a sewing machine disclosed in JP2000-354395, the motor speed control of the sewing machine is influenced by an ambient temperature, a torque of the sewing machine, and the like and thus stability of the speed control is inferior to the aforementioned method of detecting the rotation speed by means of measurement of the pulse width and the number of pulses. However, the number of parts can be reduced, thereby achieving a structure with a low cost. In addition, measurement in real time is possible because of the voltage detection. Further, according to the motor control device disclosed in JP1994-32742B2, JP1995-16553B3, and JP1995-16554B2, the sewing machine pulley and the motor pulley are connected to each other by means of the belt, which causes a large influence of torque of the motor and the sewing machine. For example, at a time of high temperature, the torque of the sewing machine becomes small and current supplied to the motor is also small. In addition, since the counter electromotive voltage of the motor is also low, the rotation number of the motor is controlled at high level. On the other hand, at a time of low temperature, the torque of the sewing machine becomes large and the counter electromotive voltage of the motor is also high. Then, by the control of decreasing the rotation number of the motor, a phenomenon for stabilizing the number of rotations of the motor occurs.

Thus, a need exists for a motor control circuit for a sewing machine that can detect a rotation speed of a motor at a low cost without a photo interrupter and an encoder disc exclusively provided for a speed detection, and can control the rotation speed of the motor not influenced by an ambient temperature or a torque of the sewing machine.

### SUMMARY OF THE INVENTION

According to an aspect of the present invention, a motor control circuit for a sewing machine, including a speed command circuit for instructing a target speed of a motor serving as a driving source of a sewing machine, a power supply circuit for supplying a power to the motor, a drive circuit for controlling a power supplied to the motor in response to a command from the speed command circuit by performing an ON/OFF control on an output from the power supply circuit, a counter electromotive force detection circuit for detecting a counter electromotive voltage of the motor when the output from the power supply circuit is in OFF state by means of the drive circuit, and calculating an actual speed of the motor by using the counter electromotive voltage detected, and a mechanical pulse generator for detecting a rotation corresponding to a movement of a sewing needle, which is regarded as a sewing machine speed, through a pulse signal characterized in that the motor control circuit for a sewing machine further comprises a correction circuit for calculating a speed correction value for the target speed on the basis of a comparison between the target speed input to the speed command circuit and the sewing machine speed as an output from the pulse generator, and a comparison process circuit for feed-backing a pulse width to the drive circuit, the pulse width to be feedbacked being obtained by adding the speed correction value for the target speed to a result of a subtraction of the actual speed from the target speed.

According to the aforementioned invention, the control of the motor control circuit is not affected by the ambient temperature or a torque of the sewing machine. The rotation speed is constantly monitored by the mechanical pulse generator and the output of the counter electromotive force detection circuit is corrected so as to achieve the target speed. Thus, without using the multiple pulse generators at high cost, the output of the counter electromotive force detection circuit at low cost can be corrected. The detection of the rotation speed of the motor can be performed at low cost, and not affected by the ambient temperature or the torque of the sewing machine, thereby achieving stable ration speed control of the motor.

### BRIEF DESCRIPTION OF THE DRAWINGS

The foregoing and additional features and characteristics of the present invention will become more apparent from the following detailed description considered with reference to the accompanying drawings, wherein:

Fig. 1 is a schematic view for showing a structure of a motor control circuit for a sewing machine according to a first embodiment of the present invention;

Fig. 2 is a circuit diagram for showing the structure of the motor control circuit for a sewing machine according to the first embodiment of the present invention;

Figs. 3A, 3B, 3C and 3D are waveform charts of respective circuit signals of the motor control circuit for a sewing machine according to the first embodiment of the present invention;

Fig. 4 is a graph for showing characteristics of an actual speed of a motor detected by a counter electromotive force detection circuit and a counter electromotive voltage signal of the motor according to the first embodiment of the present invention;

Fig. 5 is a view for explaining an output from a position sensor used in the motor control circuit for a sewing machine according to the first embodiment of the present invention;

Fig. 6 is a flowchart of a control performed by the motor control circuit for a sewing machine according to the first embodiment of the present invention;

Fig. 7 is a flowchart of an actual speed input routine used in the motor control circuit for a sewing machine according to the first embodiment of the present invention;

Fig. 8 is a flowchart of a speed correction value routine used in the motor control circuit for a sewing machine according to the first embodiment of the present invention;

Fig. 9 is a flowchart of a control performed by the motor control circuit for a sewing machine according to a second embodiment of the present invention; and

Fig. 10 is a flowchart of a speed correction value routine used in the motor control circuit for a sewing machine according to the second embodiment of the present invention.

### DETAILED DESCRIPTION

A first embodiment of the present invention is explained with reference to the attached drawings.

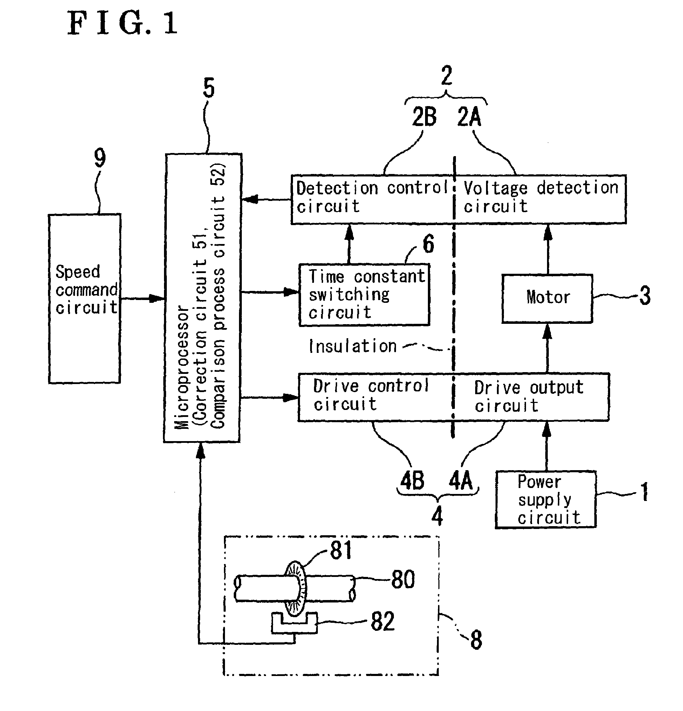

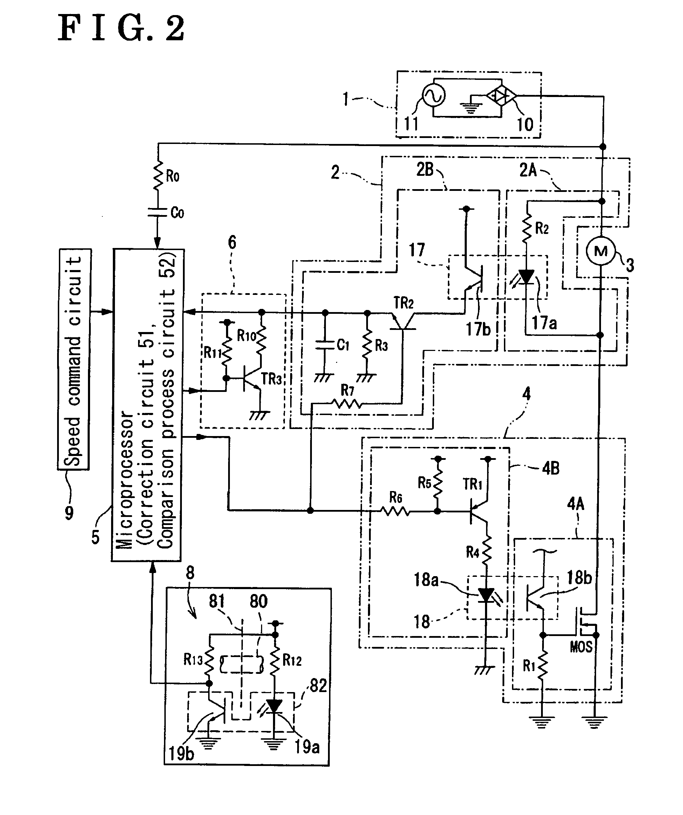

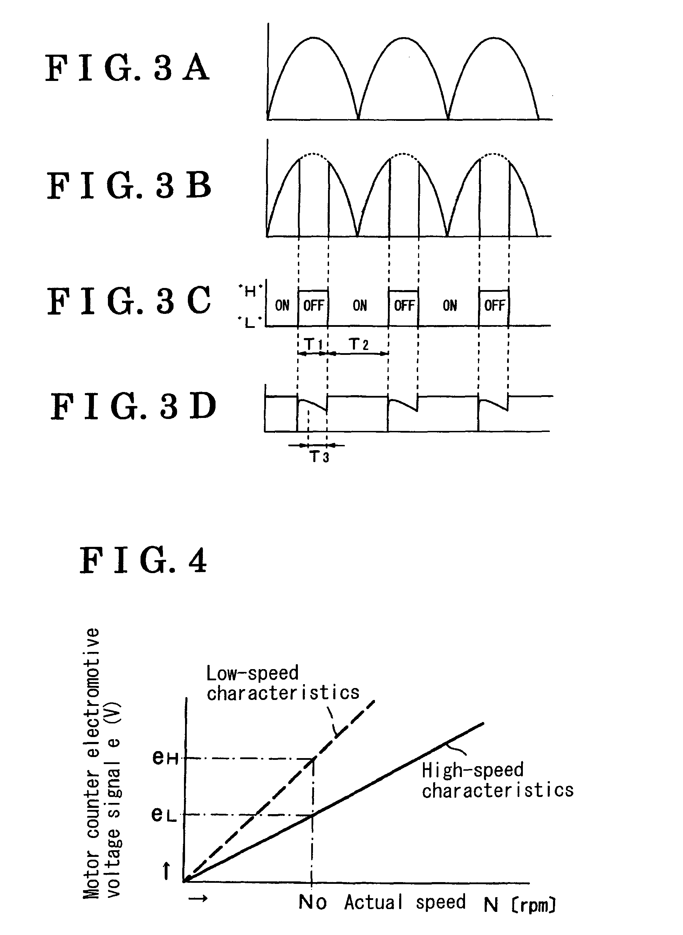

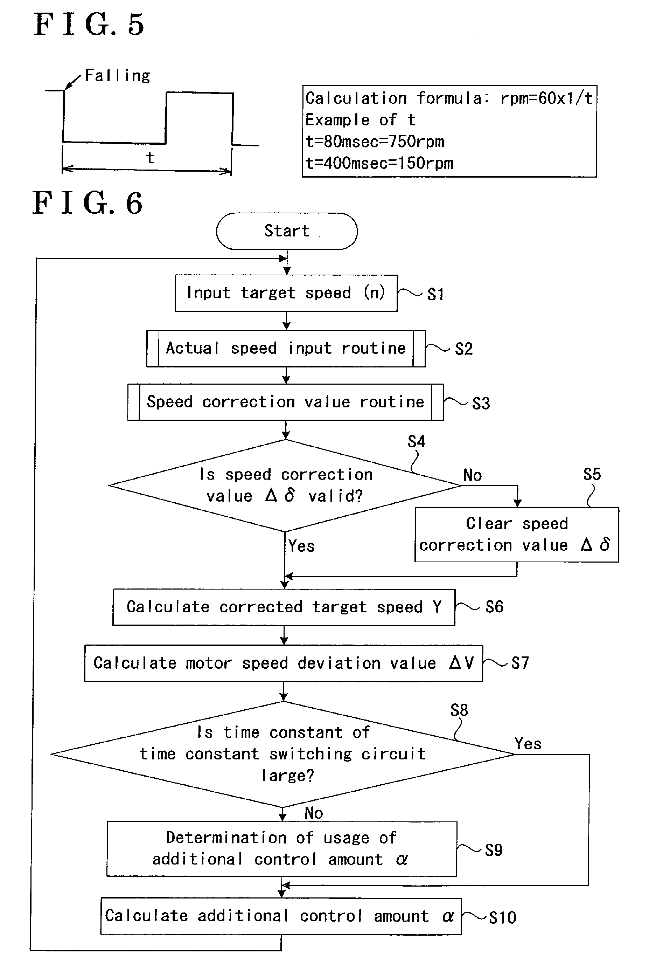

Fig. 1 is a schematic view for showing a structure of a motor control circuit for a sewing machine. Fig. 2 is a circuit diagram for showing the structure of the motor control circuit for the sewing machine. Figs. 3A, 3B, 3C, and 3D are waveform charts of respective circuit signals of the motor control circuit for the sewing machine. Fig. 4 is a graph for showing characteristics of an actual speed of a motor detected by a counter electromotive force detection circuit and a counter electromotive voltage signal of the motor. Fig. 5 is a view for explaining an output of a position sensor used in the motor control circuit for the sewing machine.

As shown in Figs. 1 and 2, a power supply circuit 1 includes a commercial power supply 11 and a rectifier circuit 10 thereof. The commercial power supply 11 supplies power to a motor 3 constituted by a direct-current (DC) electric motor. Either a full-wave rectifier circuit or a half-wave rectifier circuit can be used for the rectifier circuit 10. According to the present embodiment, an alternating circuit can be used, instead of the rectifier circuit 10, if a drive circuit 4 (to be mentioned later) has switching characteristics of alternating current. A counter electromotive force detection circuit 2 detects a counter electromotive voltage of the motor 3 when an output from the power supply circuit 1 is in OFF state by means of the drive circuit 4. Precisely, the counter electromotive force detection circuit 2 includes a voltage detection circuit 2A for detecting the counter electromotive voltage of the motor 3 as light, and a detection control circuit 2B for obtaining the counter electromotive voltage detected by the voltage detection circuit 2A as variable proportional to an actual speed N of the motor 3 that is a controlled object. The motor 3 is constituted such that a speed thereof is controllable by control current such as PWM signal.

The drive circuit 4 controls power supplied to the motor 3 by means of ON/OFF control in response to a command from a speed command circuit 9. The drive circuit 4 can perform ON/OFF control at a predetermined timing. Further, the drive circuit 4 includes a drive output circuit 4A for controlling an output from the power supply circuit 1 to be supplied to the motor 3 by means of a switching element MOS, and a drive control circuit 4B for generating a light control signal used for ON/OFF controlling on the switching element MOS of the drive output circuit 4A. According to the present embodiment, the switching element MOS constitutes a switching circuit for which an element such as a transistor, a gate such as an analog gate, and the like can be employed. Furthermore, according to the present embodiment, PWM control is performed on an output from a comparison process circuit 52 to the drive circuit 4 so that the motor 3 can acquire a designated target speed n.

A time constant switching circuit 6 switches time constant (i.e. inverse of damping factor) in response to an output from the counter electromotive force detection circuit 2 based on a speed information such as a target speed n from the speed command circuit 9, an actual speed N from the counter electromotive force detection circuit 2, and a corrected actual speed obtained by adding the actual speed to a speed correction value (to be mentioned later). The time constant is small with a parallel resistance of discharge resistances R3 and R10 while the time constant is large with the discharge resistance R3 only. The speed command circuit 9 includes an input means such as a variable resistor, a ten-key, and a selector through which the target speed n of the motor 3 serving as a driving source of a sewing machine is input. A position sensor 8 includes an encoder disc 81 attached to an upper shaft 80 of a main body of the sewing machine, and a photo interrupter 82 for detecting a slit formed on the encoder disc 81. According to the present embodiment, the position sensor 8 may be a mechanical pulse generator for detecting a rotation corresponding to a movement of a sewing needle, which is regarded as a speed of the sewing machine, through a pulse signal.

A correction circuit 51 constituted by a microprocessor 5 equipped with an analog input terminal compares the target speed n input to the speed command circuit 9 and a sewing machine speed M converted as a speed of the motor 3 from the rotation corresponding to the movement of the sewing needle detected by the position sensor 8, and calculates a speed correction value Δδ that is applied to the target speed n and calculated on the basis of a comparison result between the target speed n and the sewing machine speed M. The comparison process circuit 52 constituted by the microprocessor 5 equipped with the analog input terminal compares a sum of the target speed n instructed by the speed command circuit 9 and the speed correction value Δδ, and the actual speed N obtained by the counter electromotive force detection circuit 2 and then feeds back a pulse width based on the comparison result to the drive circuit 4.

The drive output circuit 4A that controls the output from the power supply circuit 1 to be supplied to the motor 3 by means of the switching element MOS, and the drive control circuit 4B that generates the control signal used for ON/OFF controlling on the switching element MOS of the drive output circuit 4A are connected in an electrically insulated manner by means of a photocoupler 17. A signal transfer is available between the drive output circuit 4A and the drive control circuit 4B. In the same way, the voltage detection circuit 2A that detects the counter electromotive voltage of the motor 3, and the detection control circuit 2B that obtains variable proportional to the rotation speed of the motor 3 detected by the voltage detection circuit 2A are connected in an electrically insulated manner by means of a photocoupler 18. A signal transfer is available between the voltage detection circuit 2A and the detection control circuit 2B.

A detailed structure of the motor control circuit for a sewing machine according to the first embodiment is explained with reference to Fig. 2. As shown in Fig. 2, the power supply circuit 1 that includes the commercial power supply 11 and the full-wave rectifier circuit 10 thereof supplies power to one terminal of the motor 3. The other terminal of the motor 3 is connected to the switching element MOS of the drive output circuit 4A. The motor 3 is powered when the switching element MOS is turned to ON position. An optically coupled light detecting element 18b, a resistance R1, and the switching element MOS constitute the drive output circuit 4A in such a manner that a terminal voltage of the resistance R1 is changed on the basis of an input signal of the light detecting element 18b. The switching element MOS performs a switching operation accordingly.

The counter electromotive voltage of the motor 3 is detected while the drive circuit 4 is in OFF state as an amount of light of a luminous element 17a series-connected to a limiting resistance R2 that is connected between the terminals of the motor 3. The limiting resistor R2 and the luminous element 17a series-connected thereto constitute the voltage detection circuit 2A for detecting the counter electromotive voltage of the motor 3 as an amount of light of the luminous element 17a. The luminous element 17a and a light detecting element 17b constitute the photocoupler 17. The emission of light from the luminous element 17a is detected by the light detecting element 17b, and a current in response to the light detecting timing of the luminous element 17a is charged in a capacitor C1. That is, when an output from the drive circuit 4 is in OFF state, i.e. an output from the comparison process circuit 52 is in "H" position, a current flows through a parallel circuit constituted by the light detecting element 17b, a transistor TR2, and the capacitor C1 only in a state in which the transistor TR2 is turned to ON position by means of a base resistance R7. An electric charge status of the capacitor C1 depends on an output status of the light detecting element 17b. At this time, the electric charge in the capacitor C 1 is discharged by means of the discharge resistance R3.

Accordingly, the parallel circuit consisting of the light detecting element 17b, the transistor TR2, the capacitor C1 and the discharge resistance R3 constitutes the detection control circuit 2B that obtains the counter electromotive voltage detected by the voltage detection circuit 2A as variable proportional to the actual speed N of the motor 3. The voltage of the capacitor C1 is sent to the analog input terminal of the microprocessor 5 and there digitally-processed through analog-to-digital conversion (AD conversion).

Further, the electric charge in the capacitor C1 is also discharged by means of a series circuit constituted by the discharge resistance R10 and a transistor TR3 that performs a switching operation. This circuit is constituted such that the transistor TR3 is operated by an output, which is pulled up by a pull-up resistance R11, of the comparison process circuit 52. Thus, in cases where a comparative output from the microprocessor 5 functioning as the comparison process circuit 52 is in "H" position, the transistor TR3 is turned to ON position, which leads to addition of the circuit by which the electric charge in the capacitor C1 is discharged by means of the discharge resistance R10. That is, the circuit consisting of the discharge resistance R10, the transistor TR3, and the pull-up resistance R11 constitutes the time constant switching circuit 6 for varying the time constant of discharge of the capacitor C1. For example, in cases where the comparative output from the comparison process circuit 52 is in "H" position, the transistor TR3 is turned to ON position, which causes the electric charge in the capacitor C1 to be discharged also by means of the discharge resistance R10. That is, the electric charge of the capacitor C1 is discharged by means of the parallel resistance of the discharge resistances R3 and R10. In cases where the comparative output from the comparison process circuit 52 is in "L" position, the transistor TR3 is turned to OFF position and thus the electric charge in the capacitor C1 is discharged only by the discharge resistance R3.

The light detecting element 18b of the drive output circuit 4A is optically coupled so as to receive a light signal from a luminous element 18a series-connected to a transistor TR1 and a resistance R4. The luminous element 18a and the light detecting element 18b constitute the photocoupler 18. The transistor TR1 is connected to a pull-up resistance R5 and a base resistance R6. When the comparative output from the microprocessor 5 functioning as the comparison process circuit 52 is in "L" position, the transistor TR1 is turned to ON position, which causes the luminous element 18a to emit light. On the other hand, when the comparative output from the comparison process circuit 52 is in "H" position, the transistor TR1 is turned to OFF position, which causes the luminous element 18a to stop emitting light. The transistor TR1, the resistance R4, the luminous element 18a series-connected thereto, the pull-up resistance R5, and the base resistance R6 constitute the drive control circuit 4B.

When the comparative output from the comparison process circuit 52 is in "L" position, the transistor TR1 is turned to ON position, which causes the luminous element 18a to emit light. Then, the voltage fluctuation occurs in the resistance R1, which causes the switching element MOS to be turned to ON position by means of the light detecting element 18b. At the same time, the transistor TR2 is turned to OFF position and thus the emission of light of the luminous element 17a does not contribute charging of the capacitor C1. On the other hand, when the comparative output from the comparison process circuit 52 is in "H" position, the transistor TR1 is turned to OFF position so as to stop the luminous element 18a to emit light. The switching element MOS is turned to OFF position accordingly. At the same time, the transistor TR2 is turned to ON position so that the emission of light of the luminous element 17a contributes to charging of the capacitor C1.

The position sensor 8 detests by means of the photo interrupter 82 the number of rotations and a rotation angle of the encoder disc 81 attached to the upper shaft 80 of the sewing machine that is directly corresponding to a movement of the sewing needle for the purposes of stopping the sewing needle at a predetermined position.

Precisely, a luminous element 19a emits light constantly by means of a resistance R12. A light detecting element 19b is connected to the luminous element 19a by means of a resistance R13. The encoder disc 81 is positioned between the luminous element 19a and the light detecting element 19b that constitute the photo interrupter 82, and normally generates a signal of 100 pulses per rotation. However, according to the present embodiment, in view of simple explanation, the encoder disc 81 generates a signal of 1 pulse per rotation. Since the position sensor 8 generating the signal of 100 pulses per rotation is attached to the upper shaft 80 of the sewing machine for conducting a position detection of the sewing needle, the position sensor 8 generates a reference signal (not shown) by a photo interrupter (not shown) and the encoder disc 81. According to the present embodiment, as shown in Fig. 5, a falling point of a pulse is defined as zero point. Then, the position and the number of rotations of the encoder disc 81 are detected on the basis of an elapsed time between the falling points. For example, a pulse width t is equal to 1 second when the encoder disc 81 rotates one time per second. A rotation speed m of the upper shaft 80 of the sewing machine is 60 (60 x pulse number/sec) rpm accordingly. When the encoder disc 81 rotates one timer every 80 milliseconds the rotation speed m is 750 rpm. When the encoder disc 81 rotates one time every 400 milliseconds the rotation speed m is 150 rpm.

The speed command circuit 9 includes a ten-key as an input means having a function to instruct the target speed n of the motor 3, which is a driving source of the sewing machine. The comparison process circuit 52 of the microprocessor 5 compares the target speed n instructed by the speed command circuit 9 and the actual speed N as a digital value of a voltage of the capacitor C1 of the counter electromotive force detection circuit 2, and then adds to a value obtained by the above comparison result the speed correction value Δδ obtained by the correction circuit 51 so as to be applied to the actual speed n.

That is, the correction circuit 51 of the microprocessor 5 compares a pulse width calculated on the basis of the target speed n input to the speed command circuit 9 and a pulse width of the sewing machine speed M converted as a speed of the motor 3 from the rotation corresponding to the movement of the sewing needle detected by the position sensor 8 and then calculates the speed correction value Δδ for the target speed n calculated on the basis of the comparison result between the target speed n and the sewing machine speed M. The comparison process circuit 52 feeds back a control amount of "H" and "L" of the comparison output from the comparison process circuit 52 to the drive circuit 4 so as to increase the actual speed N when the actual speed N is lower than the sum of the target speed n and the speed correction value Δδ. When the actual speed N is higher than the sum of the target speed n and the speed correction value Δδ, the comparison process circuit 52 feeds back a control amount of "H" and "L" of the comparison output from the comparison process circuit 52 to the drive circuit 4 so as to decrease the actual speed N.

A resistor R0 and a capacitor C0 on an input side of the comparison process circuit 52 constitute a timing circuit for matching a waveform of the power supply circuit 1 with an output timing of the drive circuit 4. The timing circuit can be omitted by reducing a ripple factor of the rectifier circuit 10 of the power supply circuit 1.

An operation of the motor control circuit for a sewing machine is explained with reference to Figs. 3 to 5. An output waveform shown in Fig. 3A is obtained from the power supply circuit 1 through full-wave rectification. When the target speed n is input to the speed command circuit 9, the target speed n is input to the comparison process circuit 52. In addition, a terminal voltage of the motor 3 is generated as shown in Fig. 3D. The terminal voltage of the motor 3 is supplied to the luminous element 17a of the photocoupler 17 by means of the limiting resistance R2. Thus, when the motor 3 is not powered, the luminous element 17a can provide the counter electromotive voltage to the light detecting element 17b in response to the actual speed N of the motor 3. Accordingly, a motor counter electromotive voltage signal e of the capacitor C 1 in response to the actual speed N of the motor 3 is input to the comparison process circuit 52. As shown in Fig. 4, the motor counter electromotive voltage signal e is high when the actual speed N of the motor 3 is high while the motor counter electromotive voltage signal e is low when the actual speed N of the motor 3 is low. The motor counter electromotive voltage signal e represents the actual speed N of the motor 3.

The motor counter electromotive voltage signal e detected by the counter electromotive force detection circuit 2 is a voltage generated between the terminals of the motor 3, and appears as an analog voltage of an integration value based on the discharge resistance R3 and the capacitor C1 charged only when the transistor TR2 is in ON position by means of the luminous element 17a and the light detecting element 17b of the photocoupler 17. The motor counter electromotive voltage signal e is input to the analog terminal of the comparison process circuit 52. The motor counter electromotive signal e generated by the capacitor C1 and the discharge resistance R3 connected in parallel to each other becomes low when the rotation speed of the motor 3 is low, and becomes high when the rotation speed of the motor 3 is high. That is, when the rotation speed of the motor 3 is high, the counter electromotive voltage becomes large, which leads to large amount of current on the luminous element 17a, and also large amount of current on the light detecting element 17b of the photocoupler 17. The voltage at the capacitor C1 and the discharge resistance R3 connected in parallel to each other becomes high accordingly. On the other hand, when the rotation speed of the motor 3 is low, the counter electromotive voltage becomes low, which leads to small amount of current on the luminous element 17a, and also small amount of current on the light detecting element 17b of the photocoupler 17. The voltage at the capacitor C1 and the discharge resistance R3 connected in parallel to each other becomes small accordingly. Thus, the motor counter electromotive voltage signal e is proportional to the actual speed N of the motor 3 and shown as the integration value maintained for a period T3 as shown in Fig. 3D.

A case in which the discharge time constant of the capacitor C1 is reduced due to the connection of the discharge resistance R10 by the time constant switching circuit 6 is explained below. The motor counter electromotive voltage signal e detected by the counter electromotive force detection circuit 2 is obtained as an analog voltage of an integration value acquired by the parallel circuit constituted by the capacitor C1 charged only when the transistor TR2 is in ON position, the discharge resistance R3 and the discharge resistance R10 connected in parallel to one another. The motor counter electromotive voltage signal e generated by the capacitor C1, the discharge resistance R3, and the discharge resistance R10 connected in parallel to one another becomes low when the rotation speed of the motor 3 is low, and becomes high when the rotation speed of the motor 3 is high, however, the analog voltage of the integration value thereof is low as compared to that by the discharge resistance R3 only.

Fig. 4 shows high-speed characteristics and low-speed characteristics of the actual speed N of the motor 3. In the case of the low-speed characteristics, the motor counter electromotive voltage signal e detected by the counter electromotive force detection circuit 2 is made large relative to the rotation speed of the motor 3 as only the discharge resistance R3 is connected to the capacitor C1 by the time constant switching circuit 6. In the case of the high-speed characteristics, the motor counter electromotive voltage signal e detected by the counter electromotive force detection circuit 2 is made small relative to the rotation speed of the motor 3 as the parallel resistance of the discharge resistance R3 and the discharge resistance R10 is connected to the capacitor C1 by the time constant switching circuit 6. For example, at a predetertnined actual speed N0, a motor counter electromotive voltage signal eL is obtained through high-speed characteristics while a motor counter electromotive voltage signal eH is obtained through low-speed characteristics.

The correction circuit 51 compares the target speed n input to the speed command circuit 9 and the sewing machine speed M converted as the speed of the motor 3 from the rotation corresponding to the movement of the sewing needle detected by the position sensor 8, and calculates the speed correction value Δδ for the target speed n calculated on the basis of the comparison result between the target speed n and the sewing machine speed M. The comparison process circuit 52 then feeds back a control amount of "H" and "L" of the comparison output to the drive circuit 4 based on the calculated result of the correction circuit 51.

A motor drive signal of the drive control circuit 4B is transmitted to the transistor TR1, the photocoupler 18, and the switching element MOS so that the ON/OFF control is performed on the switching element MOS as shown in Fig. 3C for the purposes of controlling power supply to the motor 3. The speed of the motor 3 is controlled at a predetermined level accordingly. The switching element MOS is in OFF position during a period T1 and is in ON position during a period T2 as shown in Fig. 3C. Thus, the voltage between terminals of the motor 3 is as shown in Fig. 3B. In the counter electromotive force detection circuit 2, the counter electromotive voltage of the motor 3 is generated by a state in which the rotation of the motor 3 is retained for the period T1 during which the switching element MOS is in ON position. Then, the integration value for the period T3 shown in Fig. 3D is read as the counter electromotive voltage of the motor 3 and then the rotation speed as the actual speed N of the motor 3 is read.

At this time, a speed obtained by a sum of the target speed n instructed by the speed command circuit 9 and the speed correction value Δδ, and the actual speed N as a digital value of a voltage of the capacitor C1 are compared, and then a pulse width based on that comparison result is output from the drive circuit 4 as the motor drive signal shown in Fig. 3C. The speed of the motor 3 is controlled on the basis of this motor drive signal so that a predetermined speed (target speed n) of the motor 3 can be achieved. The motor drive signal shown in Fig. 3C is in "H" position during the period T1and is in "L" position during the period T2.

Precisely, the correction circuit 51 and the comparison process circuit 52 receive a signal of a pulse width t from the position sensor 8, and then, by regarding the input pulse width t as the rotation number of the upper shaft 80 of the sewing machine, calculate an upper shaft speed m of the upper shaft 80. Further, by multiplying the upper shaft speed m by a pulley ratio (i.e. a pulley diameter of the sewing machine divided by a pulley diameter of the motor 3), the sewing machine speed M converted as the speed of the motor 3 is obtained. Then, the correction circuit 51 obtains the speed correction value Δδ, which is a difference value between the target speed n instructed from the speed command circuit 9 and the sewing machine speed M converted as the speed of the motor 3 from the rotation corresponding to the movement of the sewing needle detected by the position sensor 8. A sum of the target speed n and the speed correction value Δδ is a corrected target speed Y used as a command speed for obtaining an actual rotation speed of the motor 3. Then, in order to obtain an ON/OFF timing of the motor 3, a motor speed deviation value ΔV is calculated by subtracting the actual speed N from the corrected target speed Y. A port of the comparison process circuit 52 is switched to "L" position by means of an output of a pulse width corresponding to the motor speed deviation value ΔV.

The photocouplers 17 and 18 are constituted so as to electrically insulate the voltage detection circuit 2A and the drive output circuit 4A from the detection control circuit 2B and the drive control circuit 4B respectively, thereby addressing an insulating structure of Class II in Europe, improving safe level of the detection control circuit 2B and the drive control circuit 4B, and realizing a low-cost control circuit of the sewing machine. Especially, with the usage of the photocouplers 17 and 18, the signal only can be transmitted between the voltage detection circuit 2A and the detection control circuit 2B, or between the drive output circuit 4A and the drive control circuit 4B while the electrical insulation is maintained therebetween.

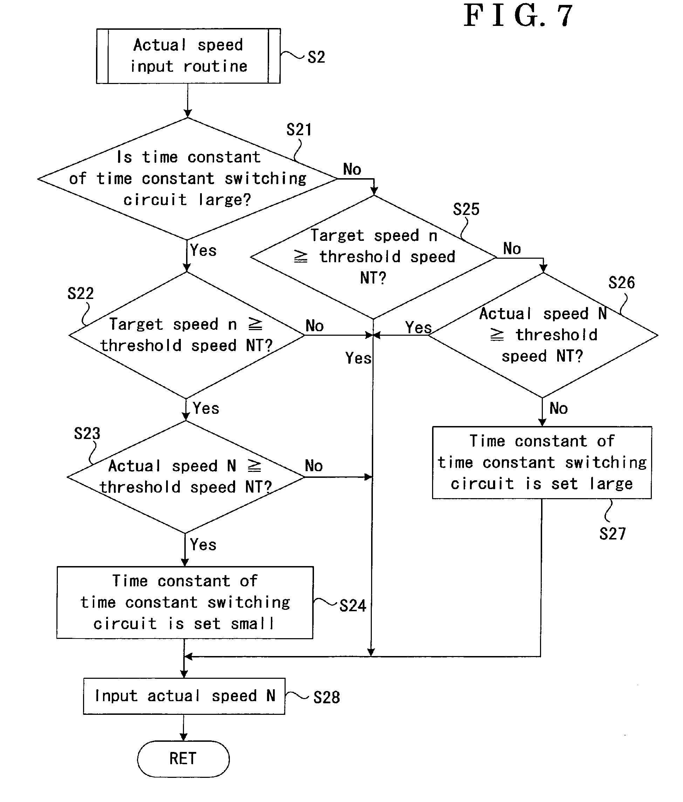

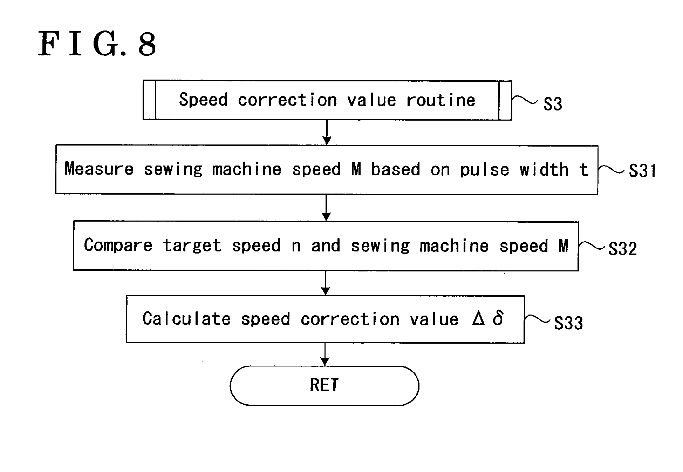

Next, a control by the correction circuit 51 and the comparison process circuit 52 consisting of the microprocessor 5 equipped with the analog input terminal is explained below. Fig. 6 is a flowchart showing a control performed by the motor control circuit for a sewing machine. Fig. 7 is a flowchart of an actual speed input routine used in the motor control circuit. Fig. 8 is a flowchart of a speed correction value routine used in the motor control circuit. The main routine in Fig. 6 is performed each time the motor 3 is driven.

In S1, a target speed n is input from the speed command circuit 9. Then, the actual speed input routine is performed in S2. According to the actual speed input routine, it is determined whether or not a time constant of the time constant switching circuit 6 is set to a large level in S21. The time constant of the time constant switching circuit 6 is set to a large level (i.e. output from the comparison process circuit 52 is in "L" position) or a small level (i.e. output from the comparison process circuit 52 is in 'H' position) at a time of an initial setting. When it is determined that the time constant is in the large level, then it is determined whether or not the target speed n is equal to or greater than a threshold speed NT in S22. In addition, it is determined whether or not an actual speed N is equal to or greater than the threshold speed NT in S23. When it is determined that the target speed n is smaller than the threshold speed NT in S22 or the actual speed N is smaller than the threshold speed NT in S23, the time constant of the time constant switching circuit 6 remains in the large level and the actual speed input routine is completed.

On the other hand, when it is determined that the target speed n is equal to or greater than the threshold speed NT in S22, and the actual speed N is equal to or greater than the threshold speed NT in S23, the input of the time constant switching circuit 6 is set to the "H" position, thereby turning on the transistor TR3. The parallel resistance circuit constituted by the discharge resistance R3 and the discharge resistance R10 is specified for the capacitor C1 so as to bring the time constant to the small level in S24. Further, when it is determined that the time constant of the time constant switching circuit 6 is in the small level in S21, then it is determined whether or not the target speed n is equal to or greater than the threshold speed NT in S25. In addition, it is determined whether or not the actual speed N is equal to or greater than the threshold speed NT in S26. When the target speed n is equal to or greater than the threshold speed NT, and the actual speed N is equal to or greater than the threshold speed NT, the time constant of the time constant switching circuit 6 remains to the small level and the actual speed input routine is completed.

When it is determined that the target speed n is smaller than the threshold speed NT in S25, and then it is determined that the actual speed N is smaller than the threshold value NT in S26, the actual speed N is respected and the input of the time constant switching circuit 6 is set to the "L" position, thereby turning off the transistor TR3. The circuit constituted by the discharge resistance R3 only is specified for the capacitor C1 so as to bring the time constant to the large level in S27. Then, in S28, the actual speed N in response to the high-speed characteristics or the low-speed characteristics thereof is input. That is, according to the actual speed input routine, when it is determined that the actual speed N is equal to or greater than the target speed n and the threshold speed NT, the time constant of the time constant switching circuit 6 is switched to the small level. Alternatively, when it is determined that the actual speed N is smaller than the target speed n and the threshold speed NT, the time constant of the time constant switching circuit 6 is switched to the large level.

Then, in S3, the speed correction value routine is performed. According to the speed correction value routine, a pulse width t shown in Fig. 5 is first measured in S31. Then, also in 531, a pulse width t sec, which is represented as 60/t in the rotation speed rpm, is multiplied by a pulley ratio (i.e. a pulley diameter of the sewing machine divided by a pulley diameter of the motor 3) so as to obtain the sewing machine speed M converted as the speed of the motor 3. In S32, the target speed n and the sewing machine speed M are compared. Then, in S33, the speed correction value Δδ is calculated by subtracting the sewing machine speed M from the target speed n.

In S4, it is determined whether or not the speed correction value Δδ is valid. For example, validity of the speed correction value Δδ is determined on the basis of the time constant which is switched by the time constant switching circuit 6. In addition, the validity of the speed correction value Δδ can be determined on the basis of a magnitude of the target speed n of the speed command circuit 9. Further, the validity of the speed correction value Δδ can be determined on the basis of a magnitude thereof. The validity of the correction value Δδ can also be determined by a combination of the above. If the correction of the target speed n is not performed, i.e. the speed correction value Δδ is determined as invalid, the speed correction value Δδ is cleared in S5.

In cases where the correction of the target speed n is performed, in S6, a corrected target speed Y is calculated by adding the speed correction value Δδ to the target speed n. In S7, a motor speed deviation value ΔV is calculated. The motor speed deviation value ΔV is obtained by subtracting the actual speed N from the corrected target speed Y. Then, in S8, it is determined whether or not the time constant of the time constant switching circuit 6 is in the large level. When the time constant is set to the small level, as the correction for the motor speed deviation value ΔV in the high-speed characteristics, it is determined in S9 that an additional control amount α is required. In S10, the control amount α is calculated. On the other hand, when the time constant is set to the large level in S8, no correction is applied to the motor speed deviation value ΔV in the low-speed characteristics and used as it is for the calculation of the control amount in S10. Accordingly, responsiveness of the rotation speed control of the motor 3 can be improved by changing the control amount.

According to the aforementioned embodiment, the corrected target speed Y is calculated by adding the speed correction value Δδ, which is obtained by subtracting the sewing machine speed M from the target speed n, to the target speed n. Then, the corrected target speed Y is subtracted from the target speed n so as to obtain the motor speed deviation value ΔV, by which a pulse width t of the drive circuit 4 is specified. Accordingly, the control of the motor control circuit is not affected by the ambient temperature or a torque of the sewing machine. The rotation speed is constantly monitored by the position sensor 8 and the output of the counter electromotive force detection circuit 2 is corrected. Thus, without using the multiple pulse generators at high cost, the output of the counter electromotive force detection circuit 2 at low cost can be corrected. The detection of the rotation speed of the motor 3 can be performed at low cost, and not affected by the ambient temperature or the torque of the sewing machine, thereby achieving stable ration speed control of the motor 3.

Further, according to the aforementioned motor control circuit for a sewing machine, the position sensor 8 is used for controlling the sewing needle to stop at a predetermined position. However, instead, a mechanical pulse generator may be used for detecting the rotation corresponding to the movement of the sewing needle as the sewing machine speed M through a pulse signal.

Furthermore, according to the aforementioned motor control circuit for a sewing machine, the correction circuit 51 compares the target speed n input to the speed command circuit 9 and the sewing machine speed M converted as the speed of the motor 3 from the rotation corresponding to the movement of the sewing needle detected by the position sensor 8, and calculates the speed correction value Δδ that is acquired from the comparison result so as to be applied to the target speed n. However, instead, a pulse width calculated on the basis of the target speed n input to the speed command circuit 9 and a pulse width of output from a mechanical pulse generator are compared, and a difference between two values of the pulse width may be used as a speed difference. That is, the correction circuit 51 constituted by the microprocessor 5 equipped with the analog input terminal compares a pulse width calculated on the basis of the target speed n input to the speed command circuit 9 and a pulse width of the sewing machine speed M converted as the speed of the motor 3 from the rotation corresponding to the movement of the sewing needle detected by the position sensor 8, and then calculates the speed correction value Δδ calculated on the basis of the comparison result and applied to the target speed n.

A second embodiment of the motor control circuit for a sewing machine is explained below. In the second embodiment, substantially same parts or components bear same reference numbers or symbols as the first embodiment and thus explanations thereof are omitted. According to the aforementioned first embodiment, the correction circuit 51 calculates the speed correction value Δδ for the target speed n input to the speed command circuit 9. That is, the target speed n is corrected. According to the second embodiment, the actual speed N detected by the counter electromotive force detection circuit 2 is corrected.

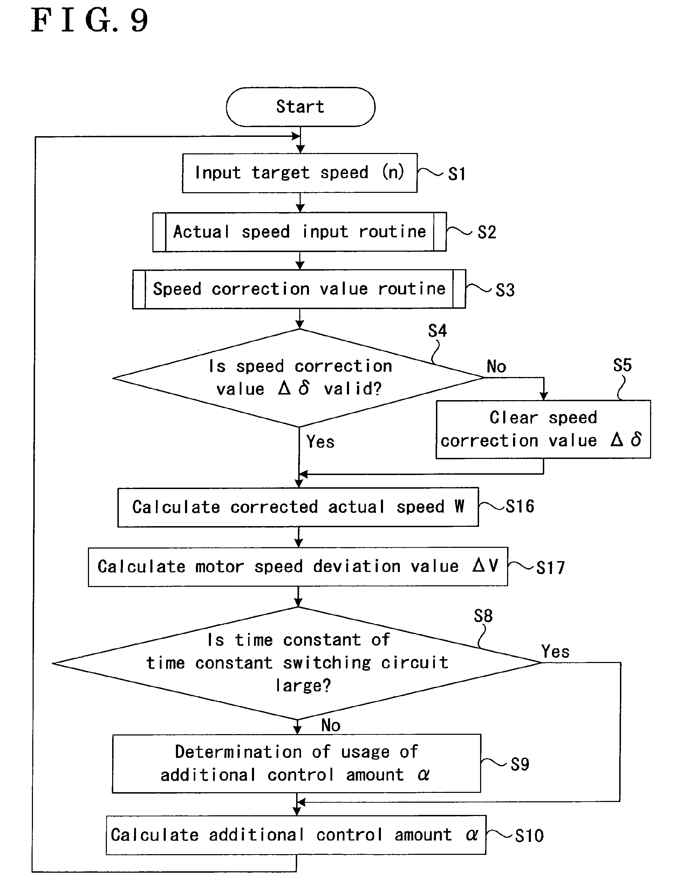

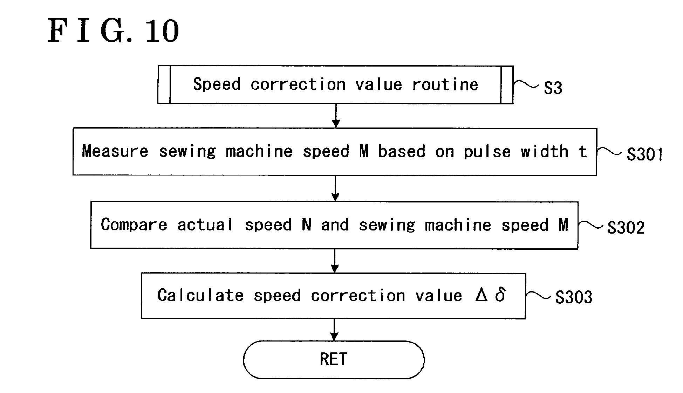

A circuit configuration, waveforms, and characteristics of the second embodiment are shown in Figs. 1 to 5. In addition, a flow of the actual speed input routine is same as that of the first embodiment and shown in Fig. 7, whose explanation is thus omitted. Fig. 9 is a flowchart showing a control performed by the motor control circuit for a sewing machine according to the second embodiment. Fig. 10 is a flowchart of a speed correction value used in the motor control circuit for a sewing machine according to the second embodiment.

The microprocessor 5 including the correction circuit 51 and the comparison process circuit 52 first compares a target speed n instructed by the speed command circuit 9 and an actual speed N as a digital value of a voltage of the capacitor C1 in the counter electromotive force detection circuit 2. Then, the microprocessor 5 adds a speed correction value Δδ, which is obtained by subtracting the sewing machine speed M converted as the speed of the motor 3 from the actual speed N, to the aforementioned comparison result. The value thus obtained is converted to a pulse width, which is fed back to the drive circuit 4. Precisely, the correction circuit 51 compares the actual speed N detected by the counter electromotive force detection circuit 2 and the sewing machine speed M calculated from a pulse width t of an output from the position sensor 8, and then calculates the speed correction value Δδ based on the comparison result so as to be applied to the actual speed N. The comparison process circuit 52 feeds back a pulse width to the drive circuit 4 based on a value obtained by adding the speed correction value Δδ for the actual speed N to a value obtained by subtracting the actual speed N from the target speed n.

In cases where a corrected actual speed W that is obtained by adding the speed correction value Δδ, which is obtained by subtracting the sewing machine speed M from the actual speed N, to the actual speed N is lower than the target speed n input from the speed command circuit 9, a control amount of "H" and "L" of a comparison output from the comparison process circuit 52 is fed back to the drive circuit 4 so as to increase the actual speed N. On the other hand, when the corrected actual speed W is higher than the target speed n, a control amount of "H" and "L" of a comparison output from the comparison process circuit 52 is fed back to the drive circuit 4 so as to decrease the actual speed N.

The motor counter electromotive voltage signal e of the capacitor C1 is input to the correction circuit 51 and the comparison process circuit 52, and compared with the target speed n input to the speed command circuit 9. Then, the motor drive signal as shown in Fig. 3C is output from the comparison process circuit 52 through the drive circuit 4 for the purposes of achieving the target speed n obtained by correcting the actual speed N of the motor 3.

That is, the motor drive signal is transmitted to the transistor TR1, the photocoupler 18, and the switching element MOS so that the ON/OFF control is performed on the switching element MOS as shown in Fig. 3C for the purposes of controlling power supply to the motor 3. The speed of the motor 3 is controlled at a predetermined level accordingly. The switching element MOS is in OFF position during a period T1 in Fig. 3C and is in ON position during a period T2. Thus, the voltage between terminals of the motor 3 is as shown in Fig. 3B. In the counter electromotive force detection circuit 2, the motor counter electromotive voltage is generated by a state in which the rotation of the motor 3 is retained for the period T1 shown in Fig. 3C during which the switching element MOS is in ON position. Then, the integration value for the period T3 shown in Fig. 3D is read as the motor counter electromotive voltage and then the rotation speed as the actual speed N of the motor 3 is read.

The comparison process circuit 52 first compares the target speed n instructed by the speed command circuit 9 and the actual speed N. Then, the comparison process circuit 52 outputs as the motor drive signal shown in Fig. 3C a pulse width based on a value obtained by adding the speed correction value Δδ to the comparison value between the target speed n and the actual speed N. A speed of the motor is controlled by this motor drive signal, thereby achieving a predetermined speed (i.e. target speed n). The motor drive signal shown in Fig. 3C is in "H" position, i.e. OFF output, for the timing T1, and in "L" position, i.e. ON output, for the timing T2.

That is, a signal of a pulse width t input from the position sensor 8 is regarded as the number of rotation of the upper shaft 80 of the sewing machine to thereby obtain the upper shaft speed m of the upper shaft 80 of the sewing machine. Further, the upper shaft speed m is multiplied by a pulley ratio (i.e. a pulley diameter of the sewing machine divided by a pulley diameter of the motor 3) so as to obtain the sewing machine speed M converted as the speed of the motor 3. The correction circuit 51 and the comparison process circuit 52 obtain the actual speed N of the motor 3 by the counter electromotive force detection circuit 2 at that time. A difference between the actual speed N detected by the correction circuit 51 and the sewing machine speed M is specified as the speed correction value Δδ. A value obtained by adding the speed correction value Δδ to the actual speed N is the corrected actual speed W, which is equal to an actual rotation speed of the motor 3. Then, a motor speed deviation value ΔV is calculated by subtracting the corrected actual speed W from the target speed n for the purposes of obtaining ON/OFF timing of the motor 3. A port of the comparison process circuit 52 is switched to "L" position by the output of the pulse width corresponding to the motor speed deviation value ΔV.

A control performed by the correction circuit 51 and the comparison process circuit 52 consisting of the microprocessor 5 is explained with reference to Figs. 7, 9 and 10. In Fig. 9, the target speed n is input from the speed command circuit 9 in S1. In S2, the actual speed input routine is performed. The main routine shown in Fig. 9 is performed each time the motor 3 is driven. In the actual speed input routine, processes from S21 to S27 shown in Fig. 7 are performed. When it is determined that the actual speed N is equal to or greater than the target speed n and the threshold speed NT, the time constant of the time constant switching circuit 6 is switched to the small level. On the other hand, when it is determined that the actual speed N is smaller than the target speed n and the threshold speed NT, the time constant of the time constant switching circuit 6 is switched to the large level.

Then, in S3, the speed correction value routine is performed. According to the speed correction routine, a pulse width t sec in Fig. 5 is measured in S301. The pulse width t sec, which is represented as 60/t in the rotation speed rpm, is multiplied by a pulley ratio (i.e. a pulley diameter of the sewing machine divided by a pulley diameter of the motor 3) so as to obtain the sewing machine speed M converted as the speed of the motor 3. The actual speed N and the sewing machine speed M are compared in S302, and then the speed correction value Δδ is obtained by subtracting the sewing machine speed M from the actual speed N.

Next, in S4, it is determined whether or not the speed correction value Δδ is valid. For example, validity of the speed correction value Δδ is determined on the basis of the time constant which is switched by the time constant switching circuit 6. In addition, the validity of the speed correction value Δδ can be determined on the basis of a magnitude of the target speed n of the speed command circuit 9. Further, the validity of the speed correction value Δδ can be determined on the basis of a magnitude thereof. The validity of the correction value Δδ can also be determined by a combination of the above. If the correction of the target speed n is not performed, i.e. the speed correction value Δδ is determined as invalid, the speed correction value Δδ is cleared in S5.

In cases where the correction of the target speed n is performed, in S16, a corrected actual speed W is calculated by adding the speed correction value Δδ to the target speed n. In S 17, a motor speed deviation value ΔV is calculated. The motor speed deviation value ΔV is obtained by subtracting the corrected actual speed W from the target speed n. Then, in S8, it is determined whether or not the time constant of the time constant switching circuit 6 is in the large level. When the time constant is set to the small level, as the correction for the motor speed deviation value ΔV in the high-speed characteristics, it is determined in S9 that an additional control amount α is required. In S10, the control amount α is calculated. On the other hand, when the time constant is set to the large level in S8, no correction is applied to the motor speed deviation value ΔV in the low-speed characteristics and used as it is for the calculation of the control amount in S10. Accordingly, responsiveness of the rotation speed control of the motor 3 can be improved by changing the control amount.

According to the aforementioned embodiment, the corrected actual speed W is calculated by adding the speed correction value Δδ, which is obtained by subtracting the sewing machine speed M from the target speed n, to the actual speed N. Then, the motor speed deviation value ΔV is calculated by subtracting the corrected actual speed W from the target speed n so as to specify a pulse width of the drive circuit 4. Accordingly, the control of the motor control circuit is not affected by the ambient temperature or a torque of the sewing machine. The rotation speed is constantly monitored by the position sensor 8 and the output of the counter electromotive force detection circuit 2 is corrected. Thus, without using the multiple pulse generators at high cost, the output of the counter electromotive force detection circuit 2 at low cost can be corrected. The detection of the rotation speed of the motor 3 can be performed at low cost, and not affected by the ambient temperature or the torque of the sewing machine, thereby achieving stable ration speed control.

Further, according to the aforementioned first and second embodiment, in cases where the validity of the speed correction value Δδ is determined on the basis of the time constant which is switched by the time constant switching circuit 6, the speed correction value Δδ can be adjusted only when an effect thereof becomes large because of the target speed n, the actual speed N, the corrected target speed Y, or the corrected actual speed W. In addition, in cases where the validity of the speed correction value Δδ is determined on the basis of a magnitude of the target speed n of the speed command circuit 9, the speed correction value Δδ can be adjusted only when an effect thereof becomes large. Further, in cases where the validity of the speed correction value Δδ is determined on the basis of a magnitude thereof, the speed correction value Δδ can be adjusted only when an effect thereof becomes large. The validity of the correction value Δδ can be determined by a combination of the above.

Furthermore, according to the aforementioned embodiments, the time constant is brought to the large level at a time of low counter electromotive voltage of the motor 3 in a low-speed rotation so that the detection voltage can be increased and a signal can be easily read out. That is, the time constant is switched in response to the speed of the motor 3, thereby enabling the detection from the high-speed rotation to the low-speed rotation of the motor 3 and achieving a stable speed control.

Furthermore, according to the aforementioned embodiments, the time constant in the counter electromotive force detection circuit 2 is determined on the basis of a speed of the motor 3 instructed by the speed command circuit 9 at a time of starting of the motor 3. When the motor 3 is rotated at a predetermined speed or more, the time constant is determined on the basis of the actual speed N calculated by the counter electromotive force detection circuit 2. The switching of the time constant by the time constant switching circuit 6 is desirably performed on the basis of the actual speed N. However, since the motor 3 is rotated at low speed at a time of starting, the time constant is then switched on the basis of the actual speed N by considering start-up state of the motor 3.

Furthermore, according to the aforementioned embodiments, the switching element MOS is used as the switching circuit. However, instead, a gate circuit such as an analog gate and a semiconductor element such as a transistor can be used.

Furthermore, according to the aforementioned embodiments, the microprocessor 5 is used as the correction circuit 51 and the comparison process circuit 52. Instead, functions of the AD converter circuit, the correction circuit 51, the comparison process circuit 52, and the speed command circuit 9 can be performed in the microprocessor 5. In such circumstances, a signal that obtains timing by itself is not necessarily input from the outside.

The motor control circuit of the present embodiments may be not only used for a sewing machine but also used for other purposes.

Furthermore, according to the aforementioned embodiments, the counter electromotive force detection circuit 2 detects the counter electromotive voltage as a voltage generated between the terminals of the motor 3 while an output from the power supply circuit 1 is turned to OFF position by means of the drive circuit 4. However, instead, a rotation of the motor rotation can be detected by an exclusive coil for detection of a motor rotation.

Furthermore, according to the aforementioned embodiments, the time constant is switched to the small level and the large level by the time constant switching circuit 6. The time constant can be switched so as to reduce a deviation of the counter electromotive voltage, and switched to two or more levels.

## Claims

1. A motor control circuit for a sewing machine, including a speed command circuit (9) for instructing a target speed of a motor (3) serving as a driving source of a sewing machine, a power supply circuit (1) for supplying a power to the motor, a drive circuit (4) for controlling a power supplied to the motor in response to a command from the speed command circuit by performing an ON/OFF control on an output from the power supply circuit, a counter electromotive force detection circuit (2) for detecting a counter electromotive voltage of the motor when the output from the power supply circuit is in OFF state by means of the drive circuit, and calculating an actual speed of the motor by using the counter electromotive voltage detected, and a mechanical pulse generator (8) for detecting a rotation corresponding to a movement of a sewing needle, which is regarded as a sewing machine speed, through a pulse signal **characterized in that** the motor control circuit for a sewing machine further comprises a correction circuit (51) for calculating a speed correction value for the target speed on the basis of a comparison between the target speed input to the speed command circuit and the sewing machine speed as an output from the pulse generator, and a comparison process circuit (52) for feed-backing a pulse width to the drive circuit, the pulse width to be feedbacked being obtained by adding the speed correction value for the target speed to a result of a subtraction of the actual speed from the target speed.

2. A motor control circuit for a sewing machine according to claim 1, wherein the correction circuit (51) compares a pulse width calculated on the basis of the target speed input to the speed command circuit (9), and a pulse width of an output from the pulse generator (8).

3. A motor control circuit for a sewing machine according to either one of claims 1 and 2, further comprising a time constant switching circuit (6) for switching a time constant of an output from the counter electromotive force detection circuit (2) based on the target speed, the actual speed, a corrected target speed obtained by adding the speed correction value to the target speed, or a corrected actual speed obtained by adding the speed correction value to the actual speed.

4. A motor control circuit for a sewing machine according to any one of claims 1 through 3, wherein the pulse generator (8) detects a position of a sewing needle of the sewing machine.

5. A motor control circuit for a sewing machine according to claim 3, wherein a validity of the speed correction value is determined on the basis of a time constant switched by the time constant switching circuit (6).

6. A motor control circuit for a sewing machine according to claim 1, wherein a validity of the speed correction value is determined on the basis of a magnitude of the target speed of the speed command circuit (6).

7. A motor control circuit for a sewing machine according to claim 1, wherein a validity of the speed correction value is determined on the basis of a magnitude thereof.
